## Europäisches Patentamt

## European Patent Office

## Office européen des brevets

(11) Veröffentlichungsnummer: **0 241 566 B1**

(12) **EUROPÄISCHE PATENTSCHRIFT**

(45) Veröffentlichungstag der Patentschrift:
16.08.89

(51) Int. Cl.⁴: **A01D 63/00**

(21) Anmeldenummer: **86105046.6**

(22) Anmeldetag: **12.04.86**

(54) Halmteilervorrichtung für Erntebergungsmaschinen.

(43) Veröffentlichungstag der Anmeldung:
**21.10.87 Patentblatt 87/43**

(45) Bekanntmachung des Hinweises auf die Patenterteilung:
**16.08.89 Patentblatt 89/33**

(84) Benannte Vertragsstaaten:
**DE FR GB IT**

(56) Entgegenhaltungen:
**DE-A- 3 115 710**
**DE-C- 725 906**
**US-A- 2 365 790**
**US-A- 4 299 080**

(73) Patentinhaber: **DEERE & COMPANY, 1 John Deere Road, Moline Illinois 61265(US)**

(72) Erfinder: **Emmert, Walter, Danziger Strasse 9, D-6662 Contwig(DE)**

(74) Vertreter: **Feldmann, Bernhard et al, DEERE & COMPANY European Office, Patent Department Steubenstrasse 36-42 Postfach 503, D-6800 Mannheim 1(DE)**

ACTORUM AG

**Beschreibung**

Die Erfindung bezieht sich auf eine Halmteilervorrichtung für Erntebergungsmaschinen mit einem Halmteilerrohr, dessen vorderer Bereich durch Zusammendrücken der Rohrwand zu einem im Querschnitt höheren als breiten Tragteil zum Anschluß einer über den Boden geführten Teilerspitze geformt ist, an die sich ein aus einem Wandteil gebildeter, schalenartiger, nach rückwärts und schräg nach oben gerichteter Abweiser anschließt.

Bei dieser Halmteilervorrichtung (DE-A 3 115 710) ist das Halmteilerrohr bereits einteilig ausgebildet mit einem vorderen Ende, das so zusammengepreßt ist, daß eine Befestigungsstelle mit U-förmigem Querschnitt für die Teilerspitze entsteht. Weitere Bohrungen in der Befestigungsstelle dienen zur Aufnahme von Abweisern. Hinter der Befestigungsstelle ist das Halmteilerrohr noch so geformt, daß ein mittig von ihm aus nach oben ragender Steg mit über die gesamte Höhe flachen Seitenwänden aus einem Teil des Rohrwandmantels gebildet ist, der weitere Bohrungen aufweist. Die Abweiser bestehen aus schalenartig ausgebildeten, nach unten offenen Blechteilen, deren sich gegenüberliegende Seitenwände sich nach vorne verjüngen und teilweise mit Abstand vor der Teilerspitze enden. Ein Abweiser ist bis in die Teilerspitze hineingeführt. Die Teilerspitze ist konisch mit einer breiten Spitze ausgebildet, so daß bei Auftreffen auf Bodenunebenheiten der Bodenwiderstand zu Beschädigungen führen kann. Hinzu kommt, daß beim Zurückfahren der Maschine zwischen Teilerspitze und Abweisern Erntegut hängen bleiben kann. Dieser Nachteil kann aber dadurch behoben werden, daß Teilerspitze und Abweiser in bekannter Art einteilig ausgebildet sind (DE-C 725 906).

Die mit der Erfindung zu lösende Aufgabe wird darin gesehen, die Halmteilervorrichtung einfacher und vor allen Dingen leichter und damit kostengünstiger unter Verbesserung ihrer Funktion auszubilden. Diese Aufgabe ist dadurch gelöst worden, daß der Tragteil zu einem doppelwandigen, über die gesamte Höhe flachen Steg geformt ist, Abweiser und Teilerspitze einstückig ausgebildet sind und der Abweiser in seinem frontseitigen Bereich zusammen mit der Teilerspitze zu zwei parallel zueinander verlaufenden, den Steg des Tragteils übergreifenden, nach unten offenen und eine Schlitzöffnung bildenden Seitenwänden abgeflacht ist, wobei der Innenabstand der Seitenwände etwa der Breite des Tragteils entspricht. Auf diese Weise sind Teilerspitze und Abweiser aus einem Blech derart geformt, daß eine schmale Ausführung der Spitze entsteht, die sich von unten schräg nach oben erstreckt und im Bereich des Tragteils eine Breite aufweist, die nur unwesentlich stärker ist als die Tragteilbreite. Hinter dem Tragteil können die Seitenteile sich zu den üblichen Abmessungen des Abweisers erweitern. Dadurch, daß die Seitenwände in ihrem parallel verlaufenden Bereich eine nach unten offene Schlitzöffnung bilden, kann die Einheit aus Teilerspitze und Abweiser leicht auf den Tragteil des Halmteilerrohres gesteckt und mit diesem verbunden werden, so daß eine einfache und leichte Bauweise geschaffen ist. Die im Spitzenbereich schmale Ausführung ermöglicht ein leichtes Durchdringen von Bodenunebenheiten, ohne daß Beschädigungen zu befürchten wären. Gleichfalls kann grünes oder nasses Lagergetreide einfacher getrennt werden, und beim Zurücksetzen der Erntemaschine kann wegen der glatten Ausführung im Bereich zwischen Teilerspitze und Abweiser sich kein Erntegut festsetzen.

Zweckmäßig kann das Halmteilerrohr an seinem vorderen den Tragteil bildenden Ende mit der Teilerspitze fest verschweißt bzw. verschraubt sein. Um die Gleitfähigkeit zu verbessern, kann ferner an der unteren Seite bzw. Kante des Tragteils eine Gleitkufe fest angeschlossen sein, wobei an die Seitenwände der Schlitzöffnung der Teilerspitze zwei dachförmig nach außen verlaufende Seitenteile angeschlossen sind, die mit der Gleitkufe verbindbar sind. Im folgenden wird die Erfindung anhand von lediglich einen Ausführungsweg darstellenden Zeichnungen näher erläutert. Es zeigt:

Fig. 1    eine perspektivische Darstellung einer Halmteilervorrichtung in der Ansicht von oben,

Fig. 2    eine perspektivische Darstellung der Halmteilervorrichtung mit dem rechten Seitenteil einer Erntebergungsvorrichtung, wobei sich die Halmteilervorrichtung in einer angehobenen Stellung befindet,

Fig. 3    eine Seitenansicht des vorderen Endes der Halmteilervorrichtung mit der Halmteilerspitze und dem daran einteilig angeschlossenen Abweiser,

Fig. 4    eine Draufsicht gemäß Fig. 3,

Fig. 5    eine Rückansicht der Halmteilerspitze,

Fig. 6    eine Draufsicht des Tragteiles zur Aufnahme der Halmteilerspitze mit dem zugehörigen Abweiser.

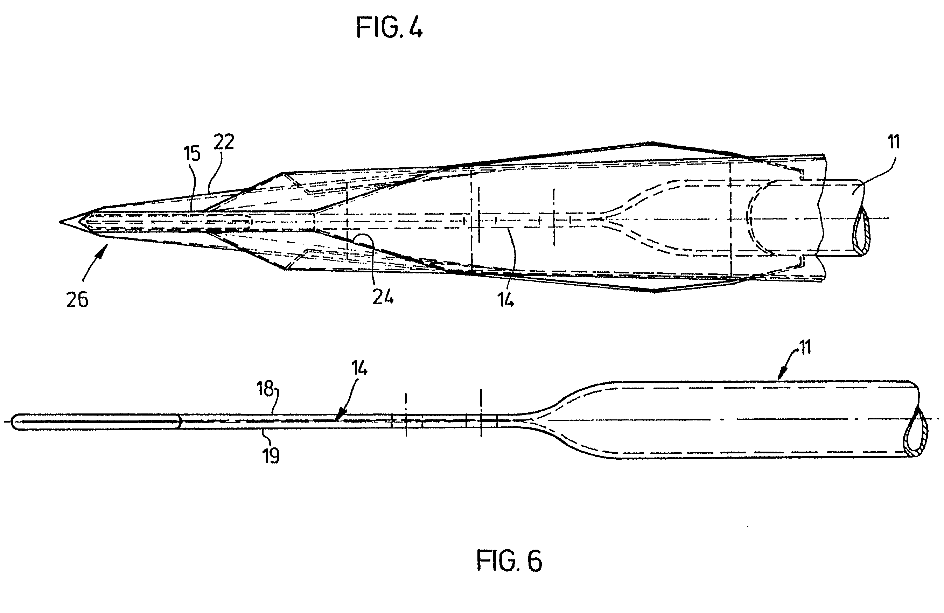

In der Zeichnung ist mit 10 eine Halmteilervorrichtung bezeichnet, die beispielsweise an eine Erntebergungsmaschine bzw. an einen Mähdrescher lösbar sowie vertikal verschwenkbar angeschlossen ist. Die Halmteilervorrichtung 10 besteht aus einem Halmteilerrohr 11, das endseitig einen Flansch 12 aufweist, der in einer an einer Erntebergungsvorrichtung 13 vorgesehenen Schlitzführung aufgenommen ist. Der Flansch 12 kann durch Zusammendrücken des Halmteilerrohres 11 gebildet werden, so daß er mit diesem einteilig verbunden ist. Das Halmteilerrohr 11 kann einen kreisförmigen oder rechteckförmigen Querschnitt aufweisen. Das Halmteilerrohr 11 ist, wie aus Fig. 6 hervorgeht, im Bereich seines vorderen Endes derart zusammengedrückt, daß sich ein vertikal verlaufender Tragteil 14 ergibt. Durch Zusammendrücken des Halmteilerrohres 11 bilden sich zwei parallel zueinander verlaufende Seitenwände 18 und 19, die allmählich in den kreisförmigen Querschnitt des Halmteilerrohres 11 übergehen.

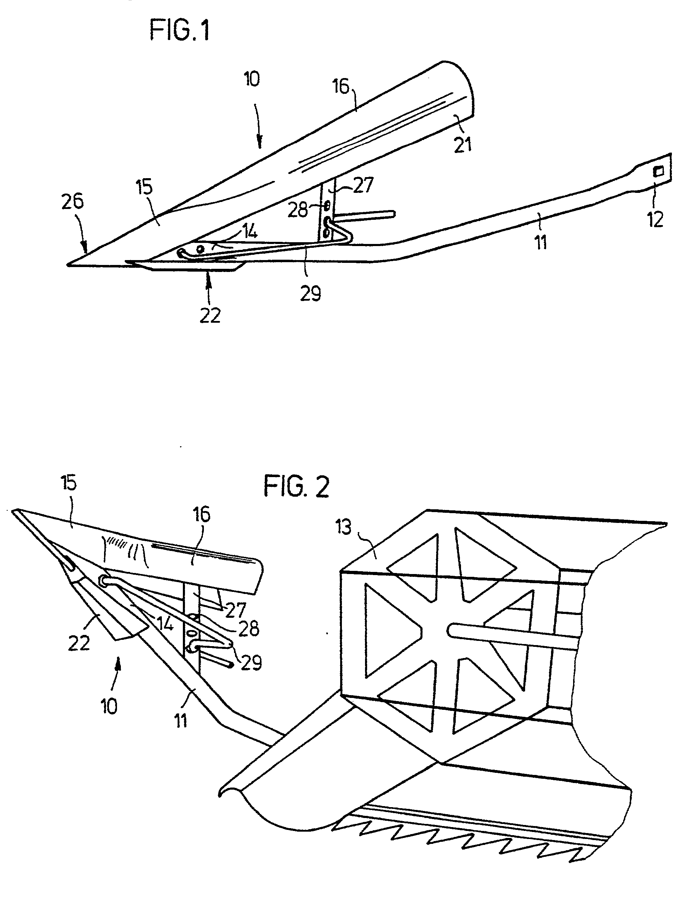

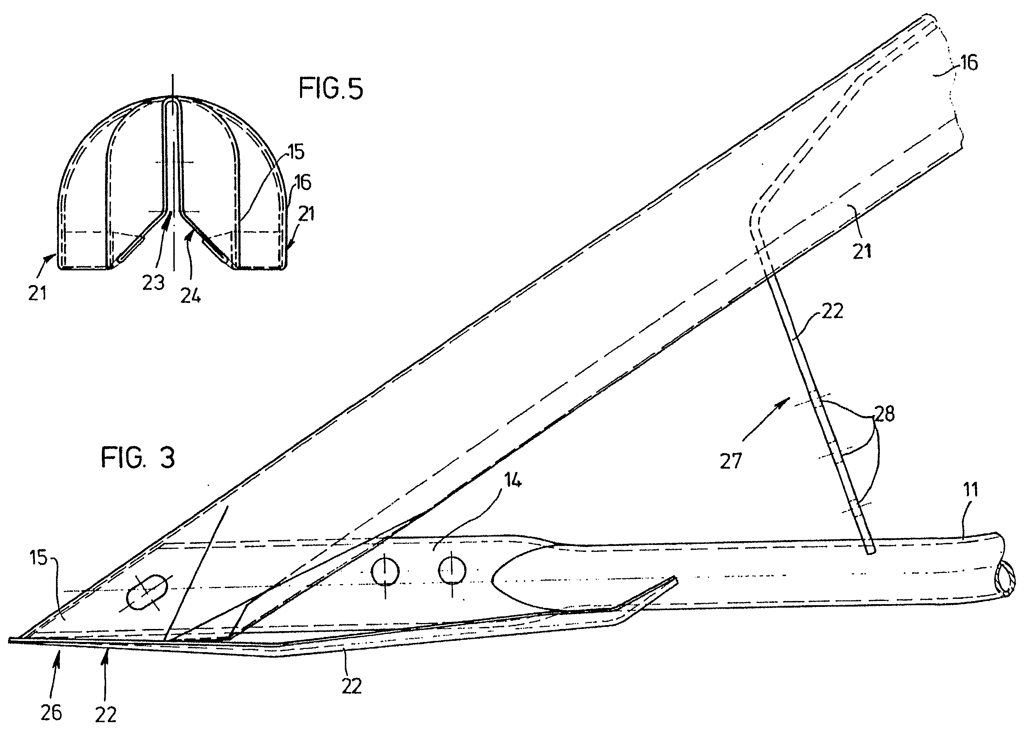

Wie aus den Figuren 1, 2 und 5 hervorgeht, weist die Halmteilervorrichtung 10 eine Teilerspitze 15 auf, die einteilig mit einem Abweiser 16 verbunden ist. Der Abweiser 16 besteht aus einem halbkreisförmig ausgebildeten, nach unten offenen Blechteil, dessen gegenüberliegende Seitenwände 21 sich nach vorne verjüngen und dann im Bereich der Teilerspitze 15 so zusammengedrückt sind, daß sie eine nach unten offene Schlitzöffnung 23 bilden. An die Schlitzöffnung 23 schließen sich zwei dachförmig zueinander angeordnete, sich nach außen erstreckende Seitenteile 24 an, die im vorderen Bereich mit einer Gleitkufe 22 fest verbindbar sind. Die Gleitkufe 22 verhindert, daß der relativ flach ausgebildete Tragteil 14 mit der Teilerspitze 15 sich in den Boden eingräbt, wenn beispielsweise die Erntebergungsvorrichtung 13 zu weit abgesenkt ist. Wie aus den Figuren 1 und 2 hervorgeht, ist der Tragteil 14 in die Schlitzöffnung 23 eingeführt und mit dieser fest verbunden, beispielsweise verschraubt oder auch verschweißt. Auf diese Weise bildet die Halmteilervorrichtung 10 mit der Teilerspitze 15, dem Abweiser 16 und dem Halmteilerrohr 11 eine einteilige Baugruppe, die insgesamt an der Erntebergungsvorrichtung 13 vertikal schwenkbar anschließbar ist.

Um der Halmteilervorrichtung 10 bzw. dem Abweiser 16 eine größere Stabilität zu verleihen, ist dieser etwa im mittleren Bereich über eine Strebe 27 fest verbunden. Die Strebe 27 weist mehrere untereinander angeordnete Bohrungen 28 auf, in die ein Gestänge 29 eingehangen werden kann, das im Bereich seines vorderen Endes mit dem Tragteil 14 fest verbunden, beispielsweise verschraubt, ist. An das Gestänge 29 kann ein in der Zeichnung nicht dargestellter Innenabweiser lösbar angeschlossen werden. Um die Höhe des Innenabweisers variieren zu können, ist die Strebe 27 mit den untereinander angeordneten Bohrungen 28 versehen, so daß das Gestänge 29 je nach Arbeitseinsatz in die entsprechende Bohrung eingeführt werden kann.

Wie insbesondere aus Fig. 1 hervorgeht, bildet die Teilerspitze 15 mit dem zugehörigen Tragteil 14 eine messerartige Schneide 26, die bei entsprechender Lage des Halmteilers verfilztes Erntegut durchschneiden oder auch Bodenteile durchpflügen kann, wenn die Halmteilervorrichtung 10 uaf unebenem Gelände eingesetzt wird. Da die Teilerspitze 15 allmählich in den Abweiser 16 übergeht, können sich im Bereich der Übergangsstelle keine Gutreste oder Strohteile festsetzen, so daß auch nach längerem Arbeitseinsatz die Halmteilervorrichtung 10 frei von Strohresten ist. Durch die vorteilhafte Formgebung der Teilerspitze 15 und auch des aus dem Halmteilerrohr 11 gebildeten Tragteiles 14 erhält man eine leicht zu erstellende Halmteilervorrichtung, die sehr robust und mit wenigen Griffen als Baueinheit an die Außenseite der Erntebergungsvorrichtung 13 anschließbar ist. Deartige Halmteilervorrichtungen 10 können in vorteilhafter Weise an allen Erntebergungsmaschinen eingesetzt werden, die derartige Halmteilervorrichtungen benötigen. Die im Ausführungsbeispiel beschriebene Halmteilervorrichtung 10 eignet sich insbesondere für Mähdrescher.

## Patentansprüche

1. Halmteilervorrichtung für Erntebergungsmaschinen mit einem Halmteilerrohr (11), dessen vorderer Bereich durch Zusammendrücken der Rohrwand zu einem im Querschnitt höheren als breiten Tragteil (14) zum Anschluß einer über den Boden geführten Teilerspitze (15) geformt ist, an die sich ein aus einem Wandteil gebildeter, schalenartiger, nach rückwärts und schräg nach oben gerichteter Abweiser (16) anschließt, dadurch gekennzeichnet, daß der Tragteil (14) zu einem doppelwandigen, über die gesamte Höhe flachen Steg geformt ist, Abweiser (16) und Teilerspitze (15) einstückig ausgebildet sind und der Abweiser (16) in seinem frontseitigen Bereich zusammen mit der Teilerspitze (15) zu zwei parallel zueinander verlaufenden, den Steg des Tragteils (14) übergreifenden, nach unten offenen und eine Schlitzöffnung (23) bildenden Seitenwänden abgeflacht ist, wobei der Innenabstand der Seitenwände etwa der Breite des Tragteils entspricht.

2. Vorrichtung nach Anspruch 1, dadurch gekennzeichnet, daß das Halmteilerrohr (11) an seinem vorderen den Tragteil bildenden Ende mit der Teilerspitze (15) fest verschweißt bzw. verschraubt ist.

3. Vorrichtung nach Anspruch 1, dadurch gekennzeichnet, daß an der unteren Seite bzw. Kante des Tragteils (14) eine Gleitkufe (22) fest angeschlossen ist.

4. Vorrichtung nach einem oder mehreren der vorherigen Ansprüche, dadurch gekennzeichnet, daß an die Seitenwände der Schlitzöffnung (23) der Teilerspitze (15) zwei dachförmig nach außen verlaufende Seitenteile (24) angeschlossen sind, die mit der Gleitkufe (22) verbindbar sind.

## Claims

1. Crop divider device for harvesters with a crop divider tube (11), whose front portion is formed by pressing together the tube wall into a support part (14) higher than wide in cross-section, for connection of a divider point (15) guided over the ground, to which is connected a deflector (16) formed from a wall part, shell-like, directed rearwardly and obliquely upwards, characterized in that the support part (14) is formed to a double walled web flat over the whole height, deflector (16) and divider point (15) are formed in one piece and the deflector (16) in its front portion together with the divider point (15) is flattened to two sidewalls running parallel to one another, engaging over the web of the support part (14), downwardly open and forming a slot opening (23), the inside spacing of the sidewalls corresponding approximately to the width of the support part.

2. Device according to claim 1, characterized in that the crop divider tube (11) is fixedly welded or screwed at its front end forming the support part to the divider point (15).

3. Device according to claim 1, characterized in that a skid (22) is fixedly connected to the lower side or edge of the support part (14).

4. Device according to one or more of the preceding claims, characterized in that two roof-formed, outwardly extending side parts (24) are connected to the sidewalls of the slot opening (23) of the divider point (15), which side parts can be connected to the skid (22).

## Revendications

1. Diviseur de récolte pour moissonneuses comportant un tube diviseur de récolte (11) dont la zone antérieure prend, par compression de la paroi du tube, la forme d'un élément de support (14) de section droite plus haute que large pour le raccordement d'une pointe de diviseur (15) guidée au-dessus du sol, à laquelle se raccorde un séparateur (16) dirigé vers l'arrière et obliquement vers le haut, en forme de cuvette, constitué par une partie de paroi, caractérisé en ce que l'élément de support (14) a la forme d'une nervure à double paroi, plate sur toute la hauteur, le séparateur (16) et la pointe de diviseur (15) sont réalisés d'une seule pièce et le séparateur (16) est aplati dans sa zone frontale, avec la pointe de diviseur (15) en deux parois latérales dirigées parallèlement l'une à l'autre, recouvrant la nervure de l'élément de support (14), ouvertes vers le bas et formant une ouverture en forme de fente (23), la distance intérieure des parois latérales étant à peu près égale à la largeur de l'élément de support.

2. Dispositif suivant la revendication 1, caractérisé en ce que le tube diviseur de récolte (11) est solidarisé par soudage ou vissage avec la pointe de diviseur (15) à son extrémité antérieure constituant l'élément de support.

3. Dispositif suivant la revendication 1, caractérisé en ce qu'un patin (22) est raccordé rigidement à la face inférieure ou au bord inférieur de l'élément de support (14).

4. Dispositif suivant une ou plusieurs des revendications précédentes, caractérisé en ce que deux éléments latéraux (24) en forme de toit, dirigés vers l'extérieur se raccordent aux parois latérales de l'ouverture en forme de fente (23) de la pointe de diviseur (15) et peuvent être reliés au patin (22).

4

EP 0 241 566 B1

FIG.1

FIG. 2

FIG.5

FIG. 3

15

16

21

23

24

21

21

22

27

28

11

14

15

26

22

22

EP 0 241 566 B1

FIG. 4

FIG. 6